Europäisches Patentamt

European Patent Office

Office européen des brevets

(11) Veröffentlichungsnummer: **0 440 664 B1**

## EUROPÄISCHE PATENTSCHRIFT

(45) Veröffentlichungstag der Patentschrift: **14.07.93**

(51) Int. Cl.⁵: **H01F 5/08**

(21) Anmeldenummer: **89909392.6**

(22) Anmeldetag: **22.08.89**

(86) Internationale Anmeldenummer:
**PCT/EP89/00983**

(87) Internationale Veröffentlichungsnummer:
**WO 90/02407 (08.03.90 90/06)**

(54) **STROMBEGRENZENDE DROSSELSPULE.**

(30) Priorität: **29.08.88 DE 3829207**
     **14.06.89 DE 3919465**

(43) Veröffentlichungstag der Anmeldung:
**14.08.91 Patentblatt 91/33**

(45) Bekanntmachung des Hinweises auf die
Patenterteilung:
**14.07.93 Patentblatt 93/28**

(84) Benannte Vertragsstaaten:
**BE NL**

(56) Entgegenhaltungen:
**WO-A-89/05033**
**US-A- 3 091 702**
**US-A- 3 094 628**
**US-A- 3 143 720**
**US-A-29 460 30**

**IEEE SPECTRUM, vol. 25, no. 5, Mai 1988, New
York US, K. Fitzgerald: "Superconductivity:
fact vs. fancy", Seiten 30-41**

**REVIEW OF SCIENTIFIC INSTRUMENTS, vol.**

**41, no. 12, Dezember 1970, New York US,
Siten 1756-1763**

(73) Patentinhaber: **Licentia Patent-
Verwaltungs-GmbH
Theodor-Stern-Kai 1
W-6000 Frankfurt/Main 70(DE)**

(72) Erfinder: **VOIGT, Heinz
Tiroler Strasse 87
W-6000 Frankfurt am Main 70(DE)**
Erfinder: **FISCHER, Roland
Am Taunusblick 15
W-6369 Nidderau 2(DE)**
Erfinder: **SCHNEIDER, Rudolf
Erzberger Strasse 30
W-6230 Frankfurt am Main 80(DE)**

(74) Vertreter: **Lertes, Kurt, Dr.
Licentia Patent-Verwaltungs-GmbH Theodor-
Stern-Kai 1
W-6000 Frankfurt/M 70 (DE)**

## Beschreibung

Die Erfindung bezieht sich auf eine Vorrichtung zum Verändern der Induktivität einer auf einem Spulenkern angeordneten, von Wechselströmen durchflossenen Wicklung mittels eines von einem Strom erzeugten Magnetfelds, wobei der Kern aus supraleitfähigen und ferromagnetischen Teilen zusammengesetzt ist und der supraleitfähige Teil bei Überschreitung einer Schwelle des vom Strom erzeugten Magnetfelds vom supraleitenden in den normal leitenden Zustand versetzt wird.

Eine Vorrichtung der vorstehend beschriebenen Gattung ist bekannt (US-A-2 946 030). Die bekannte Vorrichtung enthält neben der von Wechselströmen durchflossenen Wicklung eine Steuerspule für Gleichströme und wird als Schaltelement eingesetzt, das über eine Stromeinspeisung in die Steuerspule betätigt wird. Wenn die Steuerspule keinen Gleichstrom führt, hat das Schaltelement eine sehr kleine Impedanz, so dass im Wechselstromkreis ein grosser Strom fliessen kann. Durch Einspeisung eines entsprechenden Gleichstroms in die Steuerwicklung wird die Supraleitfähigkeit des Kerns beseitigt, so dass die Vorrichtung eine hohe Impedanz aufweist, die den Wechselstrom verkleinert. Bekannt sind auch metalloxidkeramische Supraleiter (IEEE Spectrum, Band 25, Nr. 5, Mai 1988; K. Fitzgerald: "Superconductivity: fact vs. fancy", Seiten 30 - 41).

Die elektrischen Anlagen leistungsstarker Energieversorgungsnetze sind bei Störungen ausserordentlich hohen elektrodynamischen Beanspruchungen durch Kurzschlussströme ausgesetzt. Das Ausschalten des Kurzschlussstroms übernimmt der dem gestörten Netzabschnitt zugeordnete Leistungsschalter. Dabei fliesst jedoch der volle Kurzschlussstrom. Mit dem Ausbau der elektrischen Energieerzeugung und -übertragung wachsen die Kurzschlussleistungen und somit bei Störungen die elektromechanischen Kräfte in den Betriebsmitteln, vor allem an Orten hoher Leistungskonzentration und an Netzkuppelstellen.

Oft werden Sammelschienen, Schaltgeräte, Transformatoren bei der Installation überdimensioniert, um einen künftigen Anstieg der Kurzschlussleistungen Rechnung zu tragen. Vorhandene, zu schwache Anlagenteile müssen im Zuge des Netzausbaus gegebenenfalls verstärkt oder durch neue Geräte ersetzt werden. Der Aufwand in den Netzanlagen mit hoher Leistungskonzentration lässt sich reduzieren, wenn die Kurzschlussströme begrenzt werden. Im Drehstromnetz gelingt dies mit einfachen Luftdrosseln, wie in Techn. Mitt. AEG-Telefunken 61 (1971) 1, S. 58 - 63, beschrieben. An ihnen fällt eine stromproportionale Spannungsdifferenz ab, die zwar im Kurzschlussfall begrenzt wirkt, bei normaler Belastung in vielen Fällen aber für die Stabilität des Netzbetriebs zu grosse Werte annimmt. Günstiger als einfache Drosseln sind Einrichtungen mit nichtlinearer Strom-Spannungs-Charakteristik. Hierzu zählt die Begrenzungskupplung, beschrieben in ETZ-A, 87 (1966), S. 681 - 685. Sie arbeitet als Serienresonanzkreis, der auf die Netzfrequenz abgestimmt ist und im Normalbetrieb einen sehr kleinen Widerstand darstellt. Eine nichtlineare Widerstandskombination parallel zur Kapazität des Resonanzkreises sorgt dafür, dass im Störungsfall die Resonanzbedingung aufgehoben wird und die Induktivität den Strom begrenzt. Die Begrenzungskupplung, entwickelt als Kupplung zwischen zwei leistungsstarken Netzen, hat sich als Kurzschlussstrombegrenzer nicht durchgesetzt, in erster Linie wegen des grossen Aufwands für die Kondensatorenbatterie des Resonanzkreises.

Die Entwicklung von Supraleitern für Anwendungen bei hohen Stromdichten und grossen Magnetfeldern hat zu zahlreichen Lösungen und Vorschlägen für strombegrenzende Schalteinrichtungen geführt. In El. Rev. Int. Vol. 202 (1978) 5, S. 63 - 65, wird über einen Kurzschlussstrombegrenzer mit drei Transduktorenpaaren berichtet, deren Eisenkerne im Normalbetrieb mit Hilfe einer supraleitenden Stromschleife durch eine Gleichfelddurchflutung magnetisch gesättigt sind und einen niedrigen induktiven Widerstand aufweisen. Im Kurzschlussfall hebt die erhöhte Wechselstromamplitude halbwellenweise die Gleichstromdurchflutung in den Einzeltransduktoren auf, so dass dann jedes Transduktorenpaar als Drossel mit hoher Induktivität wirkt. Andere Einrichtungen nutzen den sprungartigen Widerstandsanstieg beim Übergang vom supraleitenden in den normalleitenden Zustand aus.

Dieser Übergang wird im Überlastungsfall durch Überschreiten der kritischen Stromdichte und des kritischen Magnetfelds in der betreffenden Leiteranordnung erzwungen.

In Adv. Cryogen. Engng. 13 (1968), S. 25 - 50, ist eine Anordnung beschrieben, die eine mit Flüssig-Helium gekühlte, bei Nennstrom supraleitende metallische Leiterstrecke besitzt. Diese wird mit Hilfe einer separat erregten Magnetfeldwicklung in den normalleitenden Zustand versetzt, sobald in dem zu schützenden Stromkreis ein unzulässig grosser Stromanstieg detektiert wird. Das Starkstrom-Kryoton nach DE, C, 1228701 (1969) arbeitet mit einer supraleitenden Torleiterkonfiguration, die durch das Eigenmagnetfeld der Anordnung, ggf. unterstützt durch Fremdfelder, beim Überschreiten eines Stromschwellenwerts ihre Supraleitfähigkeit verliert und zum ohmschen Widerstand wird. Die in der DE-A-27 12 990 (1977) beschriebene Anordnung zur Überstrombegrenzung in elektrischen Energieversorgungsnetzen arbeitet mit einem supraleitenden Kabelstück. In diesem sind die normalleitenden und supraleitenden Komponenten hinsichtlich der Werkstoffe und Querschnitt so bemessen, dass nach Überschreitung des kritischen Ansprechstroms schlagartig ein normalleitender, das heisst widerstandsbehafteter Strompfad resultiert, der den Strom begrenzt.

Derartige Strombegrenzer sind in Energieversorgungsnetzen nicht zum Einsatz gekommen, und zwar in erster Linie wegen des hohen kältetechnischen Aufwands für den Helium-Kühlkreislauf, der zum Betrieb metallischer Supraleiter bei Temperaturen von 4 bis 12 K notwendig ist. Ausserdem liegt ihr spezifischer Widerstand im normalleitenden Zustand bei tiefer Temperatur sehr niedrig.

Dies gilt vor allem für Hochstromsupraleiter mit Kupfer- oder Aluminiumstabilisierung, deren spezifischer Widerstand bei Betriebstemperatur die Grössenordnung von $10^{-8}$ Ohmcm hat. Dadurch benötigen solche Schalteinrichtungen grosse Leiterlängen, um den Unterschied der Widerstände im supraleitenden und normalleitenden Zustand nutzbar zu machen.

Der Erfindung liegt die Aufgabe zugrunde, eine Vorrichtung der eingangs beschriebenen Gattung dahingehend weiterzuentwickeln, dass sie bei möglichst einfachem Aufbau und wirtschaftlicher Betriebsweise als Schutzeinrichtung in Wechselstromkreisen eingesetzt werden kann.

Die Aufgabe wird erfindungsgemäss dadurch gelöst, dass der supraleitfähige Teil des Kerns aus einem metalloxidkeramischen Supraleiter besteht, dass der Kern nur eine Wicklung aufweist, dass der Wechselstrom in der Wicklung mit Netzfrequenz fliesst und dass die Schwelle des Magnetfelds von einem Schwellenstrom in der Wicklung erzeugt wird. Mit dieser Vorrichtung lässt sich eine wesentliche Reduzierung des kaltetechnischen Aufwands und der Materialkosten erreichen.

Oxidkeramische Supraleiter haben Übergangstemperaturen im Bereich von 90 K und besitzen einen spezifischen Widerstand, der nach der Aufhebung der Supraleitung um mehrere Grössenordnungen höher liegt als bei tiefgekühlten metallischen Leitern. Durch die Zunahme des ohmschen Widerstands des Kerns ab einer vorgebbaren Stromschwelle muss der Strom durch die hohe Hauptinduktivität bei kleinen Strömen im Kern fliessen. Hierdurch wird der z.B. durch einen Kurzschluss in einem Energieverteilungsnetz verursachte Strom begrenzt.

Die strombegrenzende Drossel wird insgesamt, zumindest aber der Kern mit Flüssig-Stickstoff gekühlt. Eine Kühlung mit Flüssig-Stickstoff reicht aus, um den Kern auf der für die Supraleitung notwendigen Temperatur zu halten.

Besonders günstig ist es, einen supraleitenden Hohlkörper abwechselnd aus supraleitfähigen und ferromagnetischen Elementen zusammenzusetzen.

Die Verwendung von ferromagnetischem Material in Verbindung mit dem supraleitenden Kern erhöht den magnetischen Fluss wesentlich, so dass die strombegrenzende Wirkung der Drossel im Kurzschlussfall verbessert wird. Andererseits können die Abmessungen der Drosselspule bei einer für einen bestimmten Einsatzfall festgelegten Induktivität entsprechend reduziert werden.

Bei einer zweckmässigen Ausführungsform ist das ferromagnetische Material gegen den supraleitenden Kern beziehungsweise die supraleitenden Elemente thermisch isoliert und wird auf einer Temperatur gehalten, bei der die Suszeptibilität einen für ferromagnetische Stoffe typischen hohen Wert hat. Bei dieser Ausführungsform ist es nicht notwendig, ferromagnetisches Material zu verwenden, das bei tiefen Temperaturen eine grosse Suszeptibilität behält. Insbesondere kann die Temperatur auf einen Wert geregelt werden, der tiefer als die Raumtemperatur liegt und bei dem noch eine ausreichend hohe Suszeptibilität vorhanden ist.

Bei einer vorteilhaften Ausführungsform ist ein ferromagnetischer Körper mit einer Schicht aus einem metalloxidkeramischen Supraleiter versehen. Eine derartige Ausbildung des Kerns ist sehr einfach. Der ferromagnetische Körper muss bei tiefen Temperaturen seine Suszeptibilität behalten. Wird ein ferromagnetisches Material verwendet, das bei tiefen Temperaturen keine hohe Suszeptibilität hat, dann wird vorzugsweise auf einem ferromagnetischen Körper eine thermisch isolierende Schicht vorgesehen, auf der eine Schicht aus einem metalloxidkeramischen Supraleiter angeordnet ist.

Bei einer besonders günstigen Ausführungsform bestehen der supraleitende Kern beziehungsweise die supraleitenden Elemente aus einzelnen, aneinandergereihten Segmenten aus metalloxidkeramischem Material. Mit einem derartigen Aufbau lässt sich ein grosser Kernaufbau erreichen.

Die Erfindung wird im folgenden anhand eines in einer Zeichnung dargestellten Ausführungsbeispiels näher beschrieben, aus dem sich weitere Einzelheiten, Merkmale und Vorteile ergeben.

Es zeigen

Fig. 1     einen Wechselstromkreis mit einem Kurzschlussstromgeber,

Fig. 2     einen Schnitt durch eine zylindrische Drosselspule,

Fig. 3     eine Drosselspule mit einem torusförmigen Kern und einer Ringwicklung,

Fig. 4     eine spezielle Version des supraleitfähigen Drosselkerns in Form eines Hohlzylinders mit stirnseitigen Endstücken,

Fig. 5     eine spezielle Version des supraleitenden Drosselkerns in Form eines ferromagnetisches Material enthaltenden Hohlzylinders,

| | |
|---|---|
| Fig. 6 | ein Diagramm der Abhängigkeit des Quotienten aus Induktivität der Drosselspule und Induktivität bei Nennstrom vom Quotienten aus Strom durch die Drosselspule und Nennstrom, |
| Fig. 7 | eine Kennlinie der Induktivität einer Drosselspule in Abhängigkeit vom Strom, |
| Fig. 8 | eine zusätzliche Ausführungsform einer Drosselspule im Querschnitt, |
| Fig. 9 | eine Drosselspule, die abwechselnd aus Elementen aus supraleitendem und aus ferromagnetischem Material zusammengesetzt ist, im Schnitt. |

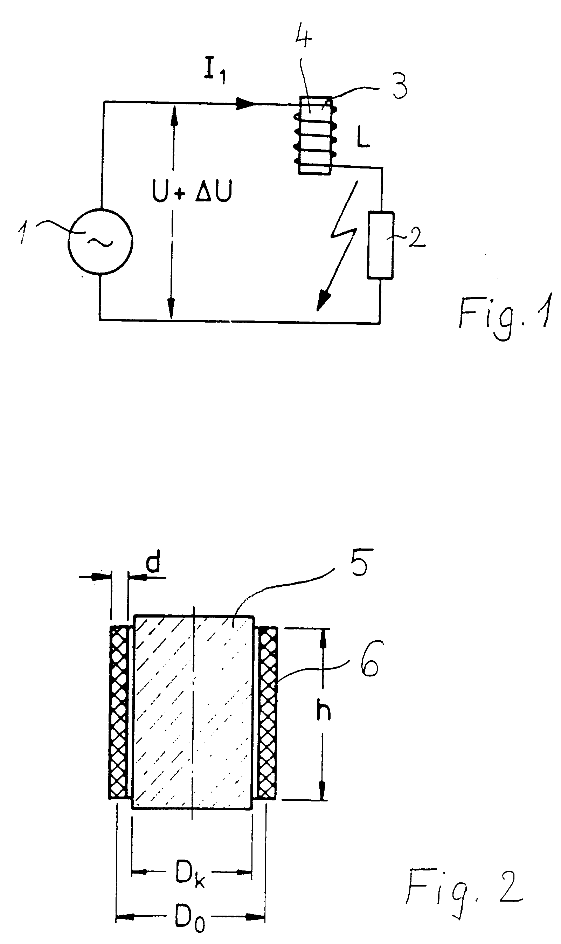

In Fig. 1 bezeichnet 1 eine Wechselstromquelle (Generator, Transformator), 2 einen Verbraucher, 3 eine strombegrenzende Drosselspule mit einem supraleitenden Kern 4 und einer Induktivität L.

Der Kern 4 ist durch Abkühlung unter die Übergangstemperatur des Kernmaterials supraleitend und bewirkt, dass infolge der Abschirmströme im Kern die Induktivität der Drossel 3 auf dem niedrigen Wert $L = L_1$ gehalten wird. An die Drossel 3 tritt der Spannungsabfall $\Delta U = I_1 \omega L_1$ auf; wenn $I_1$ den betriebsmässig fliessenden Strom, $\omega$ die Netzkreisfrequenz bezeichnet. Dabei habe die Spannung am Verbraucher 2 den Wert U und die Spannung der Stromquelle 1 den Wert $U + \Delta U$. Ein Kurzschluss, - in Figur 1 mit Pfeilsymbol eingetragen -, bedeutet, dass die Impedanz des Verbrauchers und seine Betriebsspannung U gegen Null gehen. Ohne besondere Massnahme würde dann der Kurzschlussstrom $I_1 = (U + \Delta U)/(\omega L_1)$ fliessen. Dies wird erfindungsgemäss dadurch verhindert, dass in der Drosselspule 3 bei einem unerwünschten Stromanstieg die Supraleitung im Kern durch Überschreiten der kritischen Stromdichte und magnetischen Flussdichte aufgehoben wird. Infolgedessen verschwinden die Abschirmströme, so dass der magnetische Fluss den Innenraum der Drosselwicklung voll durchdringt und zu einer Erhöhung der Induktivität auf den Wert $L_2 > L_1$ führt. Statt des Kurzschlussstroms fliesst jetzt der Strom $I_2 = (U + \Delta U) (\omega L_2)$. Bei dieser Betrachtung sind die Impedanzen der Stromquelle und Leitungen vernachlässigt.

Zur Erläuterung wird ein Zahlenbeispiel mit den Daten $U = 63,6$ kV, $I_1 = 2$ kA, $\omega = 314$ s$^{-1}$, $L_1 = 3$ mH, $\Delta U = 1,9$ kV betrachtet. Mit diesen Zahlenwerten ergibt sich der Kurzschlussstrom $I_K = 69,5$ kA $\approx 35\, I_1$.

Wird der Strom im Störungsfall zum Beispiel auf $I_K/5 \approx 14$ kA begrenzt, so sinken die Kräfte in den stromführenden Betriebsmitteln auf 1/25 der Kräfte infolge der elektrodynamischen Beanspruchung durch den vollen Kurzschlussstrom. Um die Bedingung $I_2 = I^K/5$ zu erfüllen, müsste die strombegrenzende Induktivität im Störungsfall den Wert

$$L_2 = (U + \Delta U)/(\omega I_2)$$

annehmen, das heisst auf $5\, L_1$ ansteigen. Induktivitätsänderungen dieser Art sind mit einer zylindrischen Drosselspule nach Figur 2 zu erzielen. In Figur 2 bezeichnet 5 den supraleitfähigen Kern aus Metalloxid-Keramik, insbesondere Y-Ba-Cu-O mit dem Durchmesser $D_K$, 6 die Wicklung mit dem mittleren Wicklungsdurchmesser $D_0$, der Drahtdicke d, der Höhe h und der Windungszahl w. Für die Induktivität der Zylinderwicklung allein gilt bei $d \ll D_0 : L_0 = D_0 \cdot Q\, w^2/2$ mit dem Geometriefaktor Q, der als Funktion von $D_0/h$ in Kohlrausch, Praktische Physik, Band 2 (1944), 204, tabelliert ist.

Für die Zylinderwicklung mit Kern gilt folgende Überlegung: Wenn die Temperatur des Kernmaterials dessen Übergangstemperatur $T_c$ unterschreitet, wird der Kern supraleitend und drängt den magnetischen Fluss in den Ringraum zwischen Kern und Wicklung. Zur näherungsweisen Berechnung der resultierenden Induktivität in diesem Zustand kann der Kern durch eine konzentrische zweite Zylinderwicklung gleicher Höhe, mit dem Durchmesser $D_K$ und mit gegenläufigem Wicklungssinn ersetzt werden. Die Induktivität dieser Ersatzschaltung beträgt:

$$L_1 = (D_0 \cdot Q \cdot (D_0/h) - D_K \cdot Q \cdot (D_K 7h))\, w^2/2 \qquad - (2)$$

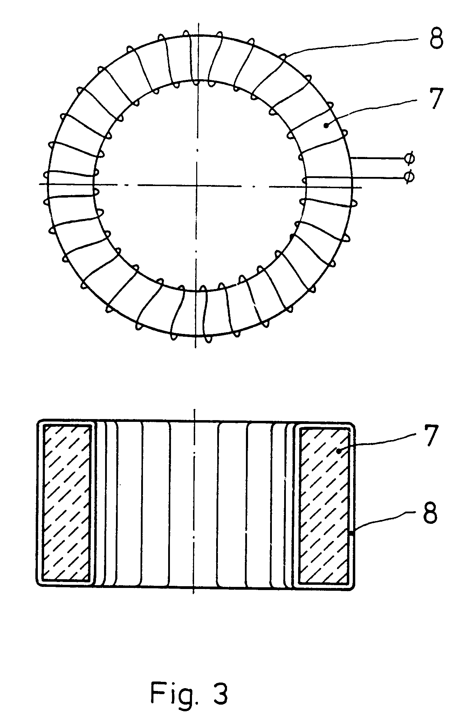

Wird die Supraleitung im Kern durch Überschreiten der kritischen Stromdichte und magnetischen Flussdichte aufgehoben, so steigt die Induktivität auf den Wert $L_0 = L_2$ und begrenzt den Strom auf den Betrag $(U + \Delta U)/(\omega L_2)$. Diese einfache Beziehung gilt, wenn der spezifische Widerstand des Kernmaterials so hoch ist, dass die im Kern ohne Supraleitung induzierten Wirbelströme die Induktivität praktisch nicht beeinflussen. Das vorstehende Konzept der Strombegrenzung ist prinzipiell auf Wicklungen und Kerne mit anderer Geometrie übertragbar, so auch auf toroidale Anordnungen nach Figur 3, die ohne störende magnetische Streufelder arbeiten. In Figur 3 bezeichnet 7 den torusförmigen Kern auf supraleitender Keramik und 8 die sie umgebende Ringwicklung.

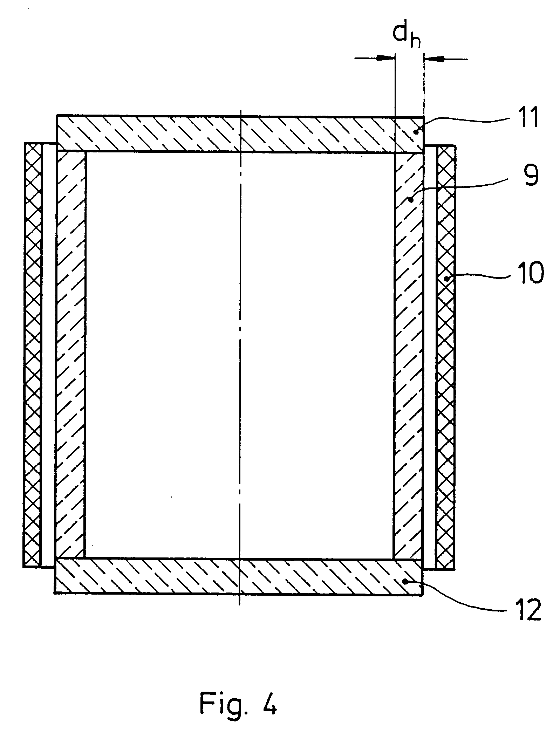

Eine weitere Version des Kerns ist in Figur 4 am Beispiel einer zylindrischen Drosselspule dargestellt: Der Kern 9 ist als Hohlzylinder mit der Wanddicke $d_h$ ausgebildet und konzentrisch zu der Wicklung 10 angeordnet.

Endstücke 11 und 12 verschliessen den Hohlzylinder an den Stirnseiten. Sie bewirken, dass im supraleitenden Zustand der magnetische Fluss der Wicklung nicht in den Innenraum des Zylinders eindringt und somit eine vergleichbare Abschirmung wie bei einem massiven zylindrischen Kern entsteht.

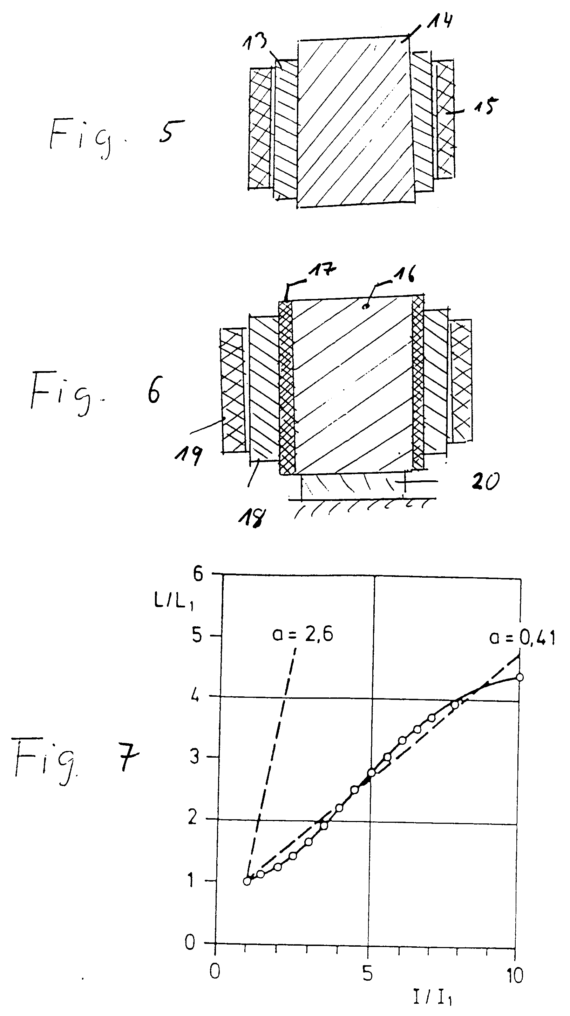

In Figur 5 ist der supraleitende Kern 13 als geschlossener Hohlzylinder ausgebildet, in dem sich ferromagnetisches Material 14 befindet. Der Kern 13 ist von einer Wicklung 15 umgeben.

Das ferromagnetische Material muss bei tiefen Temperaturen seine Suszeptibilität behalten. Es wird ein ferromagnetisches Material eingesetzt, das bei höheren Temperaturen, zum Beispiel Raumtemperatur eine hohe Suszeptibilität hat, die im Bereich von 90 K erhalten bleibt.

Bei der in Figur 6 dargestellten Ausführungsform ist ein zylindrischer Körper 16 aus ferromagnetischem Material von einer Schicht 17 aus thermisch isolierendem Material umgeben. Die Schicht 17 ist wiederum von einem hohlzylindrischen, supraleitenden Kern 18 umgeben, an dessen Aussenseite eine zylindrische Wicklung 19 angeordnet ist. Durch die Schicht 17 wird der Körper 16 vom Kern 18 isoliert. Der Körper 16 ist im übrigen, zum Beispiel über einen Sockel 20 mit anderen Teilen verbunden, deren Temperatur höher liegt als die Übergangstemperatur des Kerns 18. Daher weist der Körper 16 eine höhere Temperatur als der Kern 18 auf und kann aus ferromagnetischem Material bestehen, das bei niedrigen Temperaturen, die im Bereich der Übergangstemperaturen des Kerns 18 liegen, seine für ferromagnetische Stoffe typische, hohe Suszeptibilität verliert.

Der ferromagnetische Körper 14 und 16 kann auch als geschlossener Kreis ausgebildet sein, der abwechselnd Strecken aus supraleitfähigem Material und aus ferromagnetischem Material enthält um eine flache Magnetisierungskennlinie zu erzeugen. Dabei kann auch auf den hohlzylindrischen Aufbau verzichtet werden.

Der supraleitende Kern kann auch als Schicht auf einem ferromagnetischen, zum Beispiel zylindrischen oder torusförmigen, Körper aufgebracht werden. Wenn der Körper seine hohe Suszeptibilität auch bei tiefen Temperaturen behält, können Kern und Körper unmittelbar miteinander verbunden sein. Eine solche Anordnung hat den Vorteil, dass der Kern und der Körper gemeinsam gekühlt werden können. Vielfach vereinfacht sich hierdurch der konstruktive Aufwand für die Kühlung. Dies trifft für Vorrichtungen zu, bei denen das ferromagnetische Material seine Suszeptibilität im Bereich der Übergangstemperatur des Kerns beibehält. Fällt die Suszeptibilität im Bereich der Übergangstemperatur auf unerwünscht tiefe Werte ab, dann ist zwischen dem ferromagnetischen Körper und dem Kern eine thermisch isolierende Schicht vorzusehen, auf die insbesondere der Kern als Schicht aufgebracht werden kann.

Wenn die Temperatur des Kernmaterials dessen Übergangstemperatur $T_c$ unterschreitet, wird der Kern supraleitend und drängt den magnetischen Fluss in den Ringraum zwischen Kern und Wicklung. Die Drosselspule hat deshalb eine niedrige Induktivität.

Wird die Supraleitung im Kern durch Überschreiten der kritischen Stromdichte und magnetischen Flussdichte aufgehoben, so steigt die Induktivität stark an. Die oben beschriebene Drosselspule kann bei Netzfrequenz eine kleine Impedanz gegenüber der Verbraucherimpedanz aufweisen.

Die Drosselimpedanz $\omega L_1$ bei Nennstrom $I_1$ steht beispielsweise im folgenden Verhältnis zur Verbraucherimpedanz Z:

$$\omega L_1 = p \cdot Z, \qquad (3)$$

wobei p = 0,01 sein kann. Im Kurzschlussfall verbleibt die Restimpedanz:

$$Z_K = q \cdot Z \qquad (4)$$

Bei den nachstehenden Überlegungen zur Strombegrenzung wird der Einfachheit halber auf die Rechnung mit komplexen Widerständen verzichtet, da p sowie $q \ll 1$ ist.

Unter den genannten Voraussetzungen gilt für den Nennstrom bei supraleitendem Drosselkern

$$I_1 = U/(Z + \omega L_1) = U/(1 + p)Z). \qquad (5)$$

Steigt der Strom I an, so geht in dem keramischen Kern die Supraleitfähigkeit ab einer bestimmten Schwelle verloren. Beobachtet wird bei zunehmendem Magnetfeld ein nahezu stetiger Zuwachs von normalleitenden Bereichen im Volumen eines oxidischen Hoch-Übergangstemperatur-Supraleiters. Infolgedessen ist die Induktivität eine Funktion des Stroms I. Sie wird für die weiteren Betrachtungen näherungsweise in der Form

$$L/L_1 = a(I/I_1 - 1) + 1 \qquad (6)$$

angesetzt, wobei der mit a bezeichnete Koeffizient aus Messungen zu bestimmen ist. Mit der Abkürzung $x = I/I_1$ lässt sich hieraus die folgende Beziehung herleiten:

$$I(p(a(x - 1) + 1) + q) = U/Z = I_1(1 + P), \qquad (7)$$

wobei mit U die Netzspannung bezeichnet ist.

Sie führt auf die Gleichung

$$x^2 + ((p - pa + q)/(pa))x - (1 + p)/(pa) = 0, \qquad (8)$$

aus der sich das Verhältnis Kurzschlussstrom/Nennstrom berechnen lässt, wenn a, p und q bekannt sind.

Beispiel

Die Figur 4 zeigt die Auswertung eines Versuchs zur Bestimmung des Koeffizienten a. Gemessen wurden die Zunahmen der Induktivität einer Drosselspule in einem Magnetfeld. Der supraleitende Kern war ein Keramik-Hohlzylinder mit 20 mm Aussendurchmesser, 16 mm Innendurchmesser und 30 mm Höhe. Die Wicklung hatte 80 Windungen, eine Länge von 26 mm, einen mittleren Durchmessser von 21 mm. Mit supraleitendem Kern betrug die Induktivität $L_1$ = $\mu$H mit vollständig normalleitendem Kern $L_0$ = 83 $\mu$H, gemessen bei einer Frequenz von 10 kHz. Für $L/L_1$ als Funktion von $I/I_1$ ergab sich ein S-förmiger Verlauf mit einer mittleren Steigung a = 0,41.

Die Wirkung einer analogen Drossel als Strombegrenzer soll anhand eines Beispiels diskutiert werden. Für die Netzparameter nach Gleichung (3) und (4) werden die Zahlenwerte p = 0,01 und q = 0,03 angenommen.

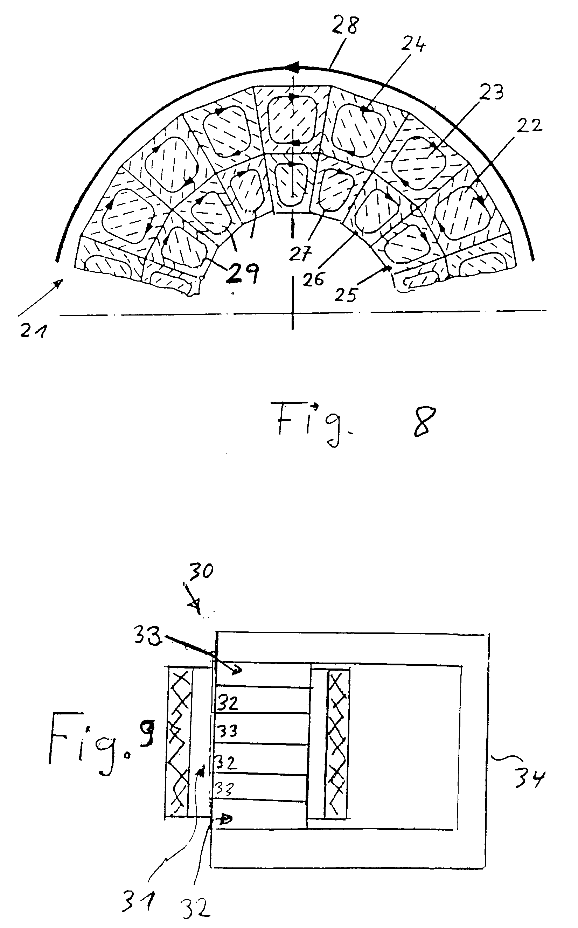

Mit a = 0,41 (nach Figur 7) liefert die Gleichung (8) das Stromverhältnis x = 11,9. Im Kurzschlussfall würde unter diesen Voraussetzungen der Strom rund auf den zwölffachen Wert des Nennstroms begrenzt. Der unbegrenzte Kurzschlussstrom, für die gleichen Parameter berechnet, würde den 25-fachen Nennstrom erreichen.

Eine weitergehende Begrenzung des Kurzschlussstroms lässt sich mit einer steileren L(I)-Kennlinie für eine Drosselspule erreichen als in Figur 7 dargestellt. Bei einer Steigung a = 2,6, die ebenfalls in Figur 7 eingetragen ist, liesse sich, wieder mit p = 0,01 und q = 0,03 der Kurzschlussstrom auf den sechsfachen Nennstrom begrenzen.

Bei grossen Kernabmessungen, die mit gängigen Herstellungsverfahren für Hoch-Übergangstemperatur-Supraleiter nicht erzeugt werden können, werden die supraleitenden Kerne unterteilt, wie dies in Figur 8 für einen Teil eines Kerns 21 dargestellt ist. Der Kern 21 setzt sich aus einzelnen Supraleitersegmenten zusammen, von denen in Figur 8 die Supraleitersegmente 22, 23, 24, 25, 26 und 27 bezeichnet sind. Die Supraleitersegmente 22, 23, 24 befinden sich in einer radial äusseren Lage des Kerns 21, während die Supraleitersegmente 25, 26, 27 eine radial innere Lage einnehmen. Es können auch mehr als die in Figur 6 dargestellten zwei Lagen vorgesehen sein. Der Kern 21 ist im Querschnitt daher vieleckig. Die supraleitersegmente 22 bis 27 bilden Teile des Vielecks. Der Kern 21 wird von einer Wicklung 28 umgeben. In jedem Supraleitersegment 22 bis 27 des Kerns fliesst ein allgemein mit 29 bezeichneter Abschirmstrom, der den Magnetfluss insgesamt aus dem Kernbereich in gleicher Weise verdrängt wie ein entsprechender Ringstrom an der Peripherie fliesst. Hierbei wird die Dicke der "Fugen" zwischen den Kernteilen klein gegenüber dem Kerndurchmesser gewählt.

Die Drosselspule gemäss Figur 8 kann zweckmässigerweise einen Hohlraum mit ferromagnetischem Material aufweisen. Sie arbeitet jedoch auch ohne ferromagnetisches Material, zum Beispiel als Vollkern. Sie kann für hohe Nennströme ausgelegt werden.

Die Figur 9 zeigt eine Drosselspule 30, die einen Kern 31 enthält, der abwechselnd Elemente 32, 33 aus supraleitendem und ferromagnetischem Material enthält. Es wird hierbei davon ausgegangen, dass das ferromagnetische Material auch unterhalb der Übergangstemperatur der supraleitenden Elemente 32 eine ausreichend hohe Suszeptibilität hat. Sollte dies nicht der Fall sein, ist zwischen den Elementen 32, 33 eine thermische Isolierung vorzusehen.

Die Drosselspule 30 hat ein Joch 34 aus ferromagnetischem Material.

Im Hinblick auf die Dimensionierung und technische Durchbildung einer erfindungsgemässen strombegrenzenden Drossel kann es sich als zweckmässig erweisen, das Kernmaterial kurz unterhalb seiner Übergangstemperatur zu betreiben, um den Magnetisierungsbedarf für den Übergang Supraleitung/Normalleitung niedrig zu halten.

Sobald der Grenzstrom die Supraleitung im Kern aufgehoben hat, entsteht durch Induktion im Kern vorübergehend Wärme, wobei die Leistungsdichte vom spezifischen Widerstand des normalleitenden Kernmaterials und vom Strom in der Drossel abhängt. Die thermische Trägheit des Kerns verhindert, dass dieser in den supraleitenden Zustand zurückfällt, bevor der dem gestörten Netzabschnitt zugeordnete Leistungsschalter den Kurzschlussstromkreis öffnet. Die hierzu benötigte Zeit beträgt üblicherweise 1 bis 2 Perioden der Netzfrequenz.

Die Drossel wird zweckmässigerweise insgesamt gekühlt. Dadurch ist einerseits zwischen Kern und Wicklung eine sehr enge magnetische Kopplung ohne kryotechnische Trennung möglich, die bei alleiniger Kühlung des Kerns notwendig wäre. Andererseits dind die ohmschen Verluste in der Wicklung niedrig, da der spezifische Widerstand des Leitermaterials der Wicklung bei Flüssigstickstoff-Temperatur auf rund 1/10 des Werts bei Raumtemperatur absinkt.

**Patentansprüche**

1. Vorrichtung zum Verändern der Induktivität einer auf einem Spulenkern (4, 5, 7, 9, 13, 18, 21) angeordneten, von Wechselströmen durchflossenen Wicklung (6, 8, 10, 15, 19) mittels eines von einem Strom erzeugten Magnetfelds, wobei der Kern (4, 5, 7, 9, 13, 18, 21) aus supraleitfähigen und ferromagnetischen Teilen (32, 33) zusammengesetzt ist, und der supraleitfähige Teil (32) bei Überschreitung einer Schwelle des vom Strom erzeugten Magnetfelds vom supraleitenden in den normal leitenden Zustand versetzt wird, **dadurch gekennzeichnet,** dass der supraleitfähige Teil des Kerns (4, 5, 7, 9, 13, 18, 21) aus einem metalloxidkeramischen Supraleiter besteht, dass der Kern nur eine Wicklung (6, 8, 10, 15, 19) aufweist, dass der Wechselstrom in der Wicklung (6, 8, 10, 15, 19) mit Netzfrequenz fliesst und dass die Schwelle des Magnetfelds von einem Schwellenstrom in der Wicklung (6, 8, 10, 15, 19) erzeugt wird.

2. Vorrichtung nach Anspruch 1, **dadurch gekennzeichnet,** dass zumindest der Kern (4, 5, 7, 9, 13, 18, 21) mit Flüssigstickstoff gekühlt wird.

3. Vorrichtung nach Anspruch 1 oder 2, **dadurch gekennzeichnet,** dass der Kern (31) abwechselnd aus supraleitfähigen und ferromagnetischen Elementen (32, 33) zusammengesetzt ist.

4. Vorrichtung nach Anspruch 3, **dadurch gekennzeichnet**, dass das ferromagnetische Material gegen den supraleitenden Teil des Kerns (18) beziehungsweise die supraleitfähigen Elemente (32) thermisch isoliert ist und auf einer Temperatur gehalten wird, bei der die Suszeptibilität einen für ferromagnetische Stoffe typischen hohen Wert hat.

5. Vorrichtung nach einem oder mehreren der vorhergehenden Ansprüche, **dadurch gekennzeichnet**, dass der supraleitende Teil des Kerns (21) beziehungsweise die supraleitenden Elemente (32) aus einzelnen Supraleitersegmenten (25, 26, 27) zusammengesetzt sind, die jeweils aneinandergrenzen.

## Claims

1. Device for varying the inductance of a winding (6, 8, 10, 15, 19), which is arranged on a coil core (4, 5, 7, 9, 13, 18, 21) and flowed through by alternating current, by means of a magnetic field generated by a current, wherein the core (4, 5, 7, 9, 13, 18, 21) is assembled from superconducting and ferromagnetic members (32, 33) and the superconducting member (32) is shifted from the superconducting to the normally conducting state on exceeding of a threshold of the magnetic field generated by the current, characterised thereby that the superconducting member of the core (4, 5, 7, 9, 13, 18, 21) consists of a metal oxide ceramic superconductor, that the core has only one winding (6, 8, 10, 15, 19), that the alternating current in the winding (6, 8, 10, 15, 19) flows at mains frequency and that the threshold of the magnetic field is generated by a threshold current in the winding (6, 8, 10, 15, 19).

2. Device according to claim 1, characterised thereby that at least the core (4, 5, 7, 9, 13, 18, 21) is cooled with liquid nitrogen.

3. Device according to claim 1 or 2, characterised thereby that the core (31) is assembled from superconducting and ferromagnetic elements (32, 33) in alternation.

4. Device according to claim 3, characterised thereby that the ferromagnetic material is thermally insulated relative to the superconducting member of the core (18) or the superconducting elements (32) and is held to a temperature at which the magnetisability has a high value typical for ferromagnetic substances.

5. Device according to one or more of the preceding claims, characterised thereby that the superconducting member of the core (21) or the superconducting elements (32) are assembled from individual superconducting segments (25, 26, 27) which adjoin one another.

## Revendications

1. Dispositif servant à modifier l'inductance d'un bobinage (6,8, 10, 15, 19) disposé sur un noyau de bobine (4, 5, 7, 9, 13, 18, 21) et traversé par des courants alternatifs, à l'aide d'un champ magnétique créé par un courant, le noyau (4, 5, 7, 9, 13, 18, 21) étant constitué de l'assemblage de parties respectivement supraconductrices et ferromagnétiques (32, 33), la partie supraconductrice (32) passant de l'état supraconducteur à l'état normalement conducteur lorsque le champ magnétique créé par le courant augmente au-delà d'un seuil, caractérisé en ce que la partie supraconductrice du noyau (4, 5, 7, 9, 13, 18, 21) est constituée d'un supraconducteur en céramique d'oxydes métalliques, en ce que le noyau ne présente qu'un seul bobinage (6, 8, 10, 15, 19), en ce que le courant alternatif traverse le bobinage (6, 8, 10, 15, 19) à la fréquence du réseau et en ce que le seuil du champ magnétique est créé par un courant de seuil traversant le bobinage (6, 8, 10, 15, 19).

2. Dispositif selon la revendication 1, caractérisé en ce qu'au moins le noyau (4, 5, 7, 9, 13, 18, 21) est refroidi à l'azote liquide.

3. Dispositif selon la revendication 1 ou 2, caractérisé en ce que le noyau (31) est constitué de l'assemblage d'éléments supraconducteurs et ferromagnétiques (32, 33) alternés.

4. Dispositif selon la revendication 3, caractérisé en ce que le matériau ferromagnétique est isolé thermiquement par rapport à la partie supraconductrice ou aux éléments supraconducteurs (32) du noyau (18) et est maintenu à une température à laquelle sa susceptibilité possède la valeur élevée typique des matériaux ferromagnétiques.

5. Dispositif selon l'une ou plusieurs des revendications précédentes, caractérisé en ce que la partie supraconductrice ou les éléments supraconducteurs (32) du noyau (21) sont constitués de l'assemblage de segments supraconducteurs distincts (25, 26, 27) en contact mutuel.

Fig. 1

Fig. 2

Fig. 3

Fig. 4

Fig. 5

Fig. 6

Fig. 7

Fig. 8

Fig. 9